# FASCICULE DE BREVET EUROPEEN

(11) **EP 3 939 146 B1**
(45) Date de publication et mention de la délivrance du brevet: **03.09.2025**
(21) Numéro de dépôt: 20709241.2
(22) Date de dépôt: 13.03.2020
(51) Int. Cl.: H02J 50/12

(54) **DISPOSITIF DE TRANSMISSION DE PUISSANCE SANS CONTACT PAR COUPLAGE INDUCTIF A RÉSONANCE POUR RECHARGER UN VÉHICULE AUTOMOBILE**
VORRICHTUNG ZUR BERÜHRUNGSLOSEN ENERGIEÜBERTRAGUNG DURCH RESONANTE INDUKTIVE KOPPLUNG ZUM WIEDERAUFLADEN EINES KRAFTFAHRZEUGES
INDUCTIVE RESONANT WIRELESS POWER TRANSMISSION DEVICE FOR CHARGING A MOTOR VEHICLE

(30) Priorité: 15.03.2019 FR 1902663; 25.07.2019 FR 1908453; 25.07.2019 FR 1908454; 25.07.2019 FR 1908455; 25.07.2019 FR 1908456
(43) Date de publication de la demande: 19.01.2022
(73) Titulaire: Valeo Electrification, 95800 Cergy (FR)
(72) Inventeur: LABBÉ, Nicolas, 95800 Cergy (FR); DIDIER, Gaëtan, 95800 Cergy (FR); NETTER, Denis, 95800 Cergy (FR); FONTCHASTAGNER, Julien, 95800 Cergy (FR); TAKORABET, Noureddine, 95800 Cergy (FR); ZANDI, Hamidreza, 95800 Cergy (FR)
(74) Mandataire: Valeo Powertrain Systems
(86) Numéro de dépôt international: PCT/EP2020/056867
(87) Numéro de publication internationale: WO 2020/187747

(56) Documents cités:
- US-A1- 2016 013 657
- US-A1- 2017 005 524
- US-A1- 2018 109 149
- JAMES J ET AL: "A variable inductor based tuning method for ICPT pickups", POWER ENGINEERING CONFERENCE, 2005. IPEC 2005. THE 7TH INTERNATIONAL SINGAPORE 29-02 NOV. 2005, PISCATAWAY, NJ, USA,IEEE, PISCATAWAY, NJ, USA, 29 November 2005 (2005-11-29), pages 1142, XP031330795, ISBN: 978-981-05-5702-7

## Description

La présente invention porte sur un circuit résonnant, émetteur ou récepteur, et sur un dispositif de transmission de puissance sans contact par couplage inductif à résonance pour charger ou recharger un véhicule automobile ou tout type de véhicule propulsé par l'intermédiaire d'une énergie électrique. De façon connue en soi, il est techniquement possible d'alimenter par transmission sans contact un véhicule automobile ou tout autre objet muni d'un dispositif de stockage d'énergie électrique à une puissance comprise entre 3 et 10 kW, lorsque cet objet est à l'arrêt (on parle dans ce cas de charge statique), ou lorsque celui-ci se déplace (on parle alors de charge dynamique. Cette alimentation par transmission sans contact se fait alors au moyen de circuits électriques distants couplés magnétiquement et accordés à la même fréquence. Les circuits couplés magnétiquement comportant chacun au moins un élément LC résonnant, L et C désignant respectivement des inductances et capacitances.

Le problème avec ce type de solution est que pour transmettre un niveau de puissance satisfaisant, notamment plusieurs kW, il faut opérer à des fréquences élevées, notamment de l'ordre de 85 kHz ou plus, pour la fréquence de travail et pour la fréquence propre de chaque circuit résonnant. En outre, ce type de solution nécessite d'opérer à faible distance entre les éléments résonnants situés à la source et à la charge.

Opérer à un tel niveau élevé de fréquence se traduit principalement par la nécessité d'employer des composants coûteux comme des ferrites doux et du fil conducteur de Litz dont les brins sont de toute petite section, par exemple inférieure ou égale à 0,07 mm de diamètre. Le document US2016/013657 divulgue un émetteur de puissance sans fil ayant un résonateur standard comprenant une inductance standard et un condensateur standard qui sont connectés en parallèle. Les inductances variables dédiées (Lr1-LrN) sont connectées en série au résonateur standard et contiennent une inductance qui varie en réponse aux tensions de contrôle (V1-VN) appliquées aux inductances variables dédiées. Les condensateurs de résonance dédiés sont connectés à des inducteurs variables dédiés. Une unité de commande (130) délivre une tension de commande. Une unité de source d'alimentation (110) convertit la puissance d'entrée en puissance d'alimentation et émet la puissance d'alimentation.

L'invention a pour but de réaliser une amplification de l'amplitude du courant et de la tension, au niveau du premier circuit résonnant avec un gain d'amplification suffisamment élevé pour permettre d'opérer à une fréquence plus basse, et/ou à une distance plus élevée.

A cet effet, l'invention a pour objet un premier circuit résonnant, notamment émetteur ou récepteur, tel que défini dans la revendication indépendante 1.

L'invention permet de faire croître l'amplitude d'un courant électrique d'amorçage fourni par le premier circuit résonnant, notamment émetteur, au deuxième circuit résonnant, notamment récepteur, lorsque le premier circuit résonnant émetteur est couplé magnétiquement au deuxième circuit résonnant, notamment récepteur.

Selon une mise en œuvre de l'invention, le premier circuit résonnant est un circuit résonnant émetteur et le deuxième circuit résonnant est un circuit résonnant récepteur.

Selon une mise en œuvre de l'invention, le premier circuit résonnant est un circuit résonnant récepteur et le deuxième circuit résonnant est un circuit résonnant émetteur.

Selon une mise en œuvre, la deuxième inductance comporte un circuit magnétique.

Selon une mise en œuvre, la valeur d'inductance de la deuxième inductance varie par variation de la réluctance du circuit magnétique de la deuxième inductance.

Selon une mise en œuvre, le circuit magnétique de la deuxième inductance comporte au moins une partie mobile, relativement au deuxième enroulement.

Selon une mise en œuvre, le circuit magnétique de la deuxième inductance comporte au moins une partie fixe, relativement au deuxième enroulement. Selon une mise en œuvre, la partie fixe et la partie mobile comportent un matériau ferromagnétique ou ferrimagnétique.

Selon une mise en œuvre, la partie mobile est mise en mouvement de sorte que des saillances se trouvent alternativement face à d'autres saillances ou entre deux saillances.

Selon une mise en œuvre, la partie mobile du circuit magnétique de la deuxième inductance, est mue par un moteur électrique.

Selon une mise en œuvre, la deuxième inductance est réalisée d'un seul tenant.

Selon une mise en œuvre, la deuxième inductance comporte un solénoïde, notamment de forme sensiblement aplatie.

L'invention permet ainsi de réaliser une amplification de l'amplitude du courant et de la tension, au niveau du premier circuit résonnant, notamment émetteur, avec un gain d'amplification suffisamment élevé pour permettre d'opérer à une fréquence plus basse, et/ou à une distance plus élevée.

Selon une mise en œuvre, la fréquence prédéterminée est choisie de sorte à faire croître l'amplitude du courant électrique circulant dans le premier circuit résonnant, notamment émetteur, en croissance exponentielle.

L'invention permet ainsi, par l'introduction d'un gain d'amplification, de transmettre un niveau satisfaisant de puissance par un procédé sans contact entre un circuit résonnant émetteur et un circuit résonnant récepteur, malgré la mise en œuvre d'une fréquence de niveau très faible par rapport à l'état de l'art.

Selon une mise en œuvre, la deuxième capacitance a une valeur sensiblement constante.

Selon une mise en œuvre, le premier circuit résonnant et/ou le deuxième circuit résonnant sont agencés pour réaliser une transmission de puissance comprise entre 1 kW et 500 kW, notamment entre 1kW et 150 kW.

Selon une mise en œuvre, le premier circuit résonnant, notamment émetteur ou récepteur est agencé pour être accordé au deuxième circuit résonnant, notamment émetteur ou récepteur. En conséquence, le premier circuit résonnant et le deuxième circuit résonnant émetteur ont sensiblement la même fréquence propre.

Selon une mise en œuvre, la fréquence prédéterminée est égale à deux fois la fréquence propre du premier circuit résonnant, notamment émetteur, à une tolérance près.

Une telle fréquence prédéterminée permet de faire croître l'amplitude du courant électrique circulant dans le premier circuit résonnant, notamment émetteur.

Selon une mise en œuvre, la tolérance ε est telle que ε = √ (((1/2) x hL x ω2moy)² - (R2' / L2')²).

Ainsi, la fréquence prédéterminée est comprise entre (2xf2) - ε et (2xf2) + ε.

Selon une mise en œuvre, la deuxième inductance est formée par un ensemble à réluctance magnétique variable comportant un rotor et un stator avec présence d'un entrefer entre eux,
- le stator comportant un solénoïde et une pluralité de bras statoriques, l'ensemble des bras statoriques formant un unique pôle magnétique lorsque le solénoïde est parcouru par un courant électrique et le pôle étant notamment considéré du côté de l'entrefer,
- le rotor comportant une pluralité de bras rotoriques formant un unique pôle magnétique lorsque le solénoïde est parcouru par un courant électrique et le pôle étant notamment considéré du côté de l'entrefer.

Selon une mise en œuvre, deux bras rotoriques adjacents sont séparés deux à deux par une portion amagnétique.

Selon une mise en œuvre, deux bras statoriques adjacents sont séparés deux à deux par une portion amagnétique.

Selon une mise en œuvre, le nombre de bras statoriques est égal au nombre de bras rotoriques.

En variante, le nombre de bras statoriques est différent du nombre de bras rotoriques.

Selon une mise en œuvre, chaque bras statorique s'étend dans une direction radiale par rapport à l'axe de rotation du rotor et comporte un paquet de tôles magnétiques feuilleté dont l'empilement est notamment réalisé dans une direction orthoradiale par rapport à la direction radiale dans laquelle s'étend le bras statorique.

Selon une mise en œuvre, l'empilement est réalisé dans une direction orthoradiale par rapport à l'axe de rotation du rotor.

En variante, l'empilement est réalisé dans une direction parallèle à l'axe de rotation du rotor.

Selon une mise en œuvre, chaque bras rotorique s'étend dans une direction radiale par rapport à l'axe de rotation du rotor et comporte un paquet de tôles magnétiques feuilleté dont l'empilement est notamment réalisé dans une direction orthoradiale par rapport à la direction radiale dans laquelle s'étend le bras rotorique.

Selon une mise en œuvre, l'empilement est réalisé dans une direction orthoradiale par rapport à l'axe de rotation du rotor.

En variante, l'empilement est réalisé dans une direction parallèle à l'axe de rotation du rotor.

Selon une mise en œuvre, le rotor comporte un arbre amagnétique.

Ceci permet que le flux ne passe que par les bras rotoriques et non par l'arbre, dans une direction axiale.

Selon une mise en œuvre, chaque bras rotorique comporte une portion en saillie, notamment disposée radialement du côté de l'axe de rotation du rotor.

Ceci permet un bon maintien des bras rotoriques sur l'arbre et permet de limiter les flux de fuites en canalisant le flux magnétique issu d'une source magnétique externe.

Selon une mise en œuvre, le solénoïde comporte une spire à plat, ou une pluralité de spires s'étendant de manière concentrique et/ou s'étendant de manière axiale, les spires étant notamment dépourvues de fil de Litz.

Selon une mise en œuvre, le solénoïde est agencé de sorte qu'un courant alternatif circulant dans les spires soit inférieur strictement à 3 kHz.

Selon une mise en œuvre, les spires comportent du fil de Litz dont la section a un diamètre strictement supérieur à 0,2 mm, notamment strictement supérieur à 0,3 mm.

Ceci permet de diminuer le nombre de fils et donc de simplifier grandement la mise en œuvre du solénoïde.

Selon une mise en œuvre, le rotor est accouplé à un moteur pour lui permettre d'être entrainé en rotation notamment à une vitesse prédéterminée Ω, cette vitesse étant exprimée en tours/s et étant telle que Ω = ((2 x f2) ± ε ) / (N), N étant le nombre de bras statoriques.

Selon une mise en œuvre, la deuxième capacitance comporte un condensateur polypropylène, notamment d'au moins 900 µF.

Selon une mise en œuvre, la deuxième inductance est formée par un solénoïde et un onduleur électronique de tension connectés électriquement en parallèle.

Selon une mise en œuvre, l'onduleur électronique de tension comporte des composants de puissance, par exemple des transistors de type IGBT formant au moins deux bras.

Selon une mise en œuvre, l'onduleur électronique de tension délivre une tension alternative commandée au moyen d'une tension continue de commande.

Selon une mise en œuvre, la tension continue de commande est assurée par une alimentation apte à délivrer une puissance supérieure ou égale à la puissance à transmettre par le couplage inductif à résonance.

Selon une mise en œuvre, le premier circuit résonnant comporte en outre une inductance de commande de valeur L2f' montée en série avec la deuxième inductance.

La valeur d'inductance L2f' de l'inductance de commande L2f varie de manière prédéterminée.

Selon un aspect de l'invention, Leq est égal à L2'+L2f' et ω2=1/ √ ((L2'+L2f') x C2').

Selon une mise en œuvre, l'inductance de commande est formée par un onduleur électronique de tension, notamment agencé pour émuler le comportement électrique de l'inductance de commande et la valeur de l'inductance L2f'.

L'invention permet de faire croître l'amplitude d'un courant électrique d'amorçage fourni par le premier circuit résonnant, notamment émetteur, au deuxième circuit résonnant, notamment récepteur, lorsque le premier circuit résonnant est couplé magnétiquement au deuxième circuit résonnant.

Selon une mise en œuvre, l'onduleur électronique de tension possède deux bornes de connexions entre lesquelles la tension alternative est délivrée, ces deux bornes de connexions étant les deux bornes entre lesquelles l'inductance de commande est émulée.

Selon une mise en œuvre, la valeur d'inductance L2f' de l'inductance de commande varie sinusoïdalement en fonction du temps autour de L2moy et avec une pulsation égale à 2 x w2moy, de sorte à faire croître l'amplitude du courant électrique circulant dans le deuxième circuit résonnant, en croissance exponentielle.

En variante, la valeur d'inductance L2f' de l'inductance de commande varie de sorte que le carré de la pulsation propre ω2 varie sinusoïdalement en fonction du temps autour de (ω2moy)² et avec une pulsation égale à 2 x w2moy, de sorte à faire croître l'amplitude du courant électrique circulant dans le deuxième circuit résonnant, en croissance exponentielle.

En d'autres termes, selon cette dernière variante, la valeur d'inductance L2f' de l'inductance de commande varie en fonction du temps selon 1/(C2' x (ω2)²), (ω2)² variant sinusoïdalement en fonction du temps et autour de la valeur (ω2moy)².

L'invention a également pour objet un dispositif de transmission de puissance sans contact par couplage inductif à résonance, notamment pour charger ou recharger en énergie électrique un véhicule automobile, comportant :
- une source d'énergie, notamment à courant alternatif,
- un deuxième circuit résonnant, étant un circuit résonnant récepteur, comportant une première capacitance et un premier enroulement, le premier enroulement comportant une inductance et une première résistance,
- un premier circuit résonnant tel que décrit précédemment, le premier circuit résonnant émetteur étant alimenté par la source d'énergie. Le premier circuit résonnant formant un circuit résonnant émetteur.

L'invention a également pour objet un dispositif de transmission de puissance sans contact par couplage inductif à résonance, notamment pour charger ou recharger en énergie électrique un véhicule automobile, comportant :
- une source d'énergie, notamment à courant alternatif,
- un deuxième circuit résonnant, formant un circuit résonnant émetteur, comportant une première capacitance et un premier enroulement, le premier enroulement comportant une inductance et une première résistance, le deuxième circuit est alimenté par la source d'énergie,
- un premier circuit résonnant tel que décrit précédemment, le premier circuit résonnant formant un circuit résonnant récepteur.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique d'un ensemble de charge ou de recharge sans contact d'un véhicule automobile selon l'invention;
La figure 2 est une représentation schématique d'un dispositif de transmission de puissance sans contact par couplage inductif à résonance selon l'invention;
La figure 3 est une représentation schématique d'un ensemble à réluctance magnétique variable selon l'invention;
La figure 4 est une représentation schématique de l'ensemble de la figure 3, selon la coupe A-A ;
La figure 5 est une représentation schématique d'une deuxième inductance selon l'invention,
La figure 6 est une représentation schématique d'un dispositif de transmission de puissance sans contact par couplage inductif à résonance selon l'invention; et
La figure 7 est une représentation schématique d'une inductance de commande selon l'invention.

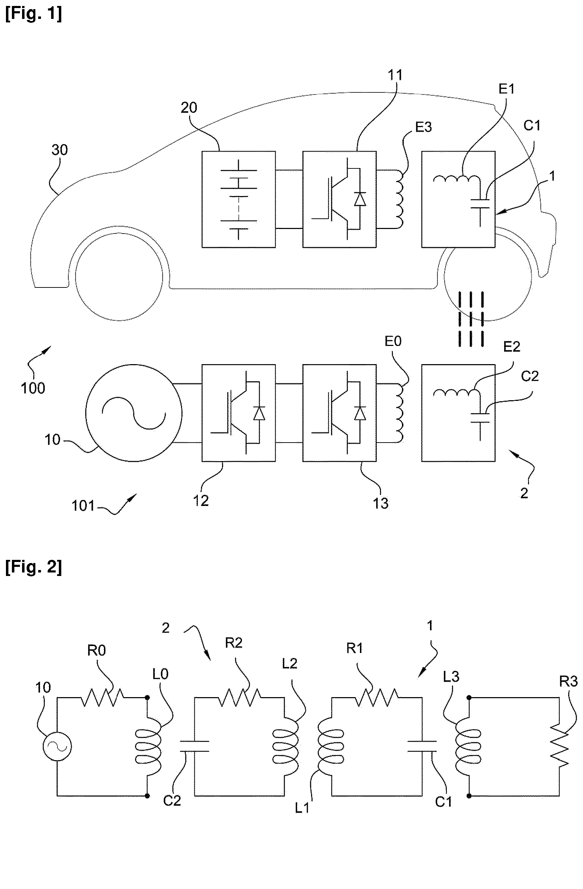

Comme visible à la figure 1, un véhicule automobile 30 embarque un dispositif de stockage d'énergie électrique 20, notamment une batterie 20 pour l'alimentation en énergie électrique d'un moteur électrique de traction non représenté ainsi que le réseau de bord du véhicule automobile 30. La batterie 20 du véhicule automobile 30 a par exemple une tension nominale de 48V ou de 300V et peut être chargée ou rechargée sans contact à l'aide d'un dispositif de transmission de puissance sans contact par couplage inductif à résonance 100.

Dans l'exemple de la figure 1, le dispositif de transmission de puissance sans contact par couplage inductif à résonance 100 comporte une source d'énergie 10 à courant alternatif alimentant un redresseur 12, le redresseur 12 étant relié électriquement à un onduleur 13 qui alimente ainsi un premier circuit résonnant, formant ici un circuit émetteur 2, en courant alternatif selon une fréquence supérieure à celle de la source 10. En variante, la source d'énergie 10 pourrait être à une fréquence utilisable directement sans nécessiter d'avoir recours à un redresseur 12 et un onduleur 13. Dans l'exemple de la figure 1, c'est l'enroulement E0 qui est alimenté via la connexion filaire à la source d'énergie 10. Cet enroulement E0 alimente alors le circuit résonnant émetteur 2 par couplage inductif.

En variante non représentée, la source d'énergie 10 à courant alternatif pourrait alimenter directement le circuit résonnant émetteur 2 en courant alternatif.

Dans l'exemple de la figure 1, un deuxième circuit résonnant, formant ici un circuit résonnant récepteur 1 comporte une première capacitance C1 et un premier enroulement E1.

Le dispositif de transmission de puissance sans contact par couplage inductif à résonance 100 comporte en outre un circuit résonnant émetteur 2 comportant une deuxième capacitance C2 et un deuxième enroulement E2.

Lorsque le circuit résonnant récepteur 1 est couplé magnétiquement au circuit résonnant émetteur 2, il y a transmission de puissance sans contact par couplage inductif à résonance au circuit résonnant émetteur 2. Ce couplage magnétique a lieu lorsque les premier E1 et deuxième E2 enroulements sont à proximité l'un de l'autre. Dans l'exemple considéré, ce couplage a lieu lorsque les premier E1 et deuxième E2 enroulements sont sensiblement à une distance comprise entre 10 cm et 1 m. Dans un autre exemple, le couplage a lieu, même si les performances sont dégradées, lorsque la distance est comprise entre 1 m et 10 m.

Comme visible à la figure 2, la source d'énergie 10 est reliée à une résistance R0 en série avec une bobine d'émission L0. L'enroulement E0 représenté à la figure 1 comporte en effet la résistance parasite R0 en série avec une bobine d'émission L0. Sur la figure 2, le redresseur 12 et l'onduleur 13 n'ont pas été représentés pour plus de simplicité.

Comme visible à la figure 2, le circuit résonnant récepteur 1 est constitué d'un circuit RLC. En effet, le circuit résonnant récepteur 1 comporte une première inductance L1 en série avec une première résistance R1 et une première capacitance C1. Le premier enroulement E1 représenté à la figure 1 comporte en effet la résistance parasite R1 en série avec la première inductance L1.

La bobine d'émission L0 est couplée magnétiquement à la première inductance L1.

Le circuit résonnant émetteur 2 est constitué d'un circuit RLC. En effet, le circuit résonnant émetteur 2 comporte une deuxième inductance L2 en série avec une deuxième résistance R2 et une deuxième capacitance C2. Le deuxième enroulement E2 représenté à la figure 1 comporte en effet la résistance parasite R2 en série avec la première inductance L2.

La deuxième capacitance C2 comporte un condensateur polypropylène, d'au moins 900 µF.

Dans l'exemple représenté, le circuit résonnant récepteur 1 et le circuit résonnant émetteur 2 sont accordés. Le circuit résonnant émetteur et le circuit résonnant récepteur ont ainsi sensiblement la même fréquence propre.

Comme visible à la figure 2, une bobine de réception L3 est reliée électriquement à une résistance R3 représentant schématiquement une résistance parasite en série avec la charge constituée par le redresseur 11 et la batterie 20 de la figure 1.

L'enroulement E3 représenté à la figure 1 comporte ici la résistance parasite en série avec la bobine de réception L3.

La bobine de réception L3 est couplée magnétiquement à la deuxième inductance L2.

Dans l'exemple des figures 1 et 2, le circuit résonnant émetteur 2 et la bobine d'émission L0 sont situés au sol, tandis que le circuit résonnant récepteur 1 et la bobine de réception L3 sont situés à bord du véhicule.

Dans l'exemple des figures 1 et 2, la deuxième capacitance a une valeur C2', la deuxième inductance a une valeur L2', et la deuxième résistance a une valeur R2'. En outre, le circuit résonnant émetteur 2 a pour pulsation propre ω2 telle que ω2=1/ √ (L2' x C2') et pour fréquence propre f2 telle que f2 = ω2 / (2π).

La valeur d'inductance de la deuxième inductance L2 varie de manière prédéterminée.

Plus précisément, la valeur d'inductance de la deuxième inductance L2 varie selon une fréquence prédéterminée et selon une amplitude de variation d'inductance hL prédéterminée autour d'une valeur moyenne L2moy, de sorte que la pulsation propre varie selon une amplitude de variation de pulsation hω prédéterminée autour d'une valeur moyenne w2moy, avec ω2moy = 1/ √ (L2moy x C2').

La fréquence prédéterminée étant choisie de sorte à faire croître l'amplitude du courant électrique alternatif circulant dans le circuit résonnant émetteur 2, en croissance exponentielle.

La valeur d'inductance L2' de la deuxième inductance L2 varie sinusoïdalement en fonction du temps autour de L2moy et avec une pulsation égale à 2 x w2moy, de sorte à faire croître l'amplitude du courant électrique circulant dans le circuit résonnant récepteur 1, en croissance exponentielle.

En variante, la valeur d'inductance L2' de la deuxième inductance L2 varie de sorte que le carré de la pulsation propre ω2 varie sinusoïdalement en fonction du temps autour de (ω2moy)² et avec une pulsation égale à 2 x w2moy, de sorte à faire croître l'amplitude du courant électrique circulant dans le circuit résonnant récepteur 1, en croissance exponentielle.

En d'autres termes, selon cette variante, la valeur d'inductance L2' de la deuxième inductance varie en fonction du temps selon 1/(C2' x (ω2)²), (ω2)² variant sinusoïdalement en fonction du temps et autour de la valeur (ω2moy)².

La deuxième capacitance C2 a une valeur sensiblement constante. On entend par valeur sensiblement constante, la valeur de cette capacitance, non comprises les variations de celle-ci liées à la température ou à l'usure ou tout autre facteur physique.

Le fréquence prédéterminée est égale à deux fois la fréquence propre du circuit résonnant émetteur 2 à une tolérance ε près. Cette tolérance ε est telle que ε = √ (((1/2) x hL x ω2moy)² - (R2' / L2')²).

Ainsi, la fréquence prédéterminée est comprise entre (2xf2) - ε et (2xf2) + ε Une telle fréquence prédéterminée permet de faire croître l'amplitude du courant électrique circulant dans circuit résonnant émetteur 2.

Selon une mise en œuvre, l'amplitude de variation de pulsation prédéterminée hω est supérieure strictement à 2 x (R2' / L2') x √ (L2' x C2').

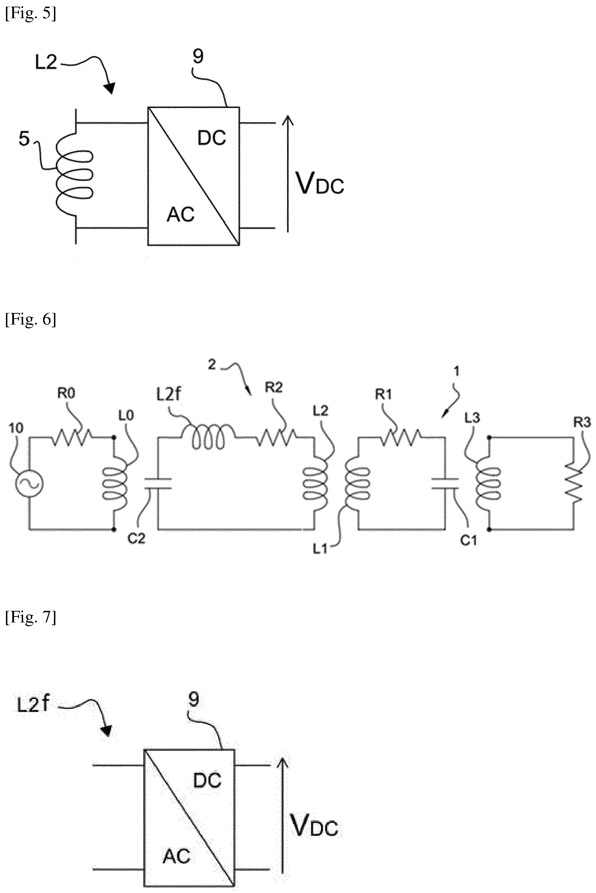

Un exemple de réalisation de la deuxième inductance L2 est décrit en lien avec la figure 5.

La deuxième inductance L2 est ici formée par un solénoïde 5 et un onduleur électronique de tension 9 connectés électriquement en parallèle.

L'onduleur électronique de tension 9 comporte des composants de puissance, notamment des transistors de type IGBT formant au moins deux bras.

L'onduleur électronique de tension 9 délivre une tension alternative commandée au moyen d'une tension continue de commande VDC.

La tension continue de commande VDC est assurée par une alimentation apte à délivrer une puissance supérieure ou égale à la puissance à transmettre par le couplage inductif à résonance.

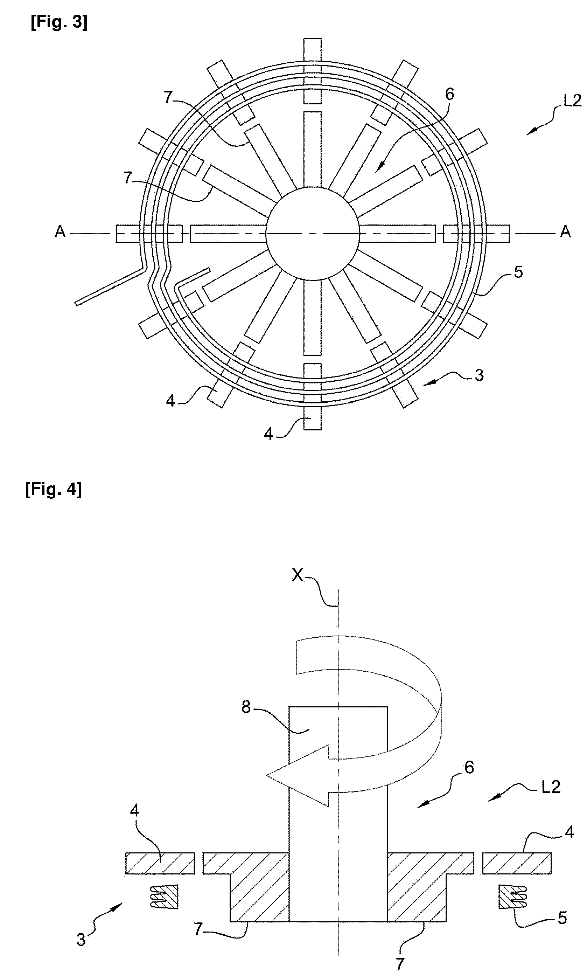

Dans l'exemple de la figure 5, le solénoïde 5 comporte une spire à plat, ou une pluralité de spires s'étendant de manière concentrique et/ou s'étendant de manière axiale. Le solénoïde 5 peut être réalisé en utilisant le stator 3 tel que décrit en lien avec la figure 3, le rotor 6 étant soit absent soit maintenu immobile.

Dans l'exemple des figures 6 et 7, le circuit résonnant émetteur 2 comporte en outre une inductance de commande L2f de valeur L2f' montée en série entre la deuxième résistance R2 et la deuxième capacitance C2. Leq = L2'+L2f'.

La deuxième capacitance a une valeur C2', l'inductance de commande a une valeur L2f', et la deuxième résistance a une valeur R2'. En outre, le circuit résonnant émetteur 2 a pour pulsation propre ω2 telle que ω2=1/√((L2'+L2f') x C2') et pour fréquence propre f2 telle que f2 = ω2 / (2π).

La valeur d'inductance L2f' de l'inductance de commande L2f varie de manière prédéterminée.

Plus précisément, la valeur d'inductance de l'inductance de commande L2f varie selon une fréquence prédéterminée et selon une amplitude de variation d'inductance hL prédéterminée autour d'une valeur moyenne L2moy, de sorte que la pulsation propre varie selon une amplitude de variation de pulsation hω prédéterminée autour d'une valeur moyenne w2moy, avec ω2moy = 1/√(L2moy x C2').

La fréquence prédéterminée étant choisie de sorte à faire croître l'amplitude du courant électrique alternatif circulant dans le circuit résonnant récepteur 1, en croissance exponentielle.

La valeur d'inductance L2f' de l'inductance de commande L2f varie sinusoïdalement en fonction du temps autour de L2moy et avec une pulsation égale à 2 x w2moy, de sorte à faire croître l'amplitude du courant électrique circulant dans le circuit résonnant récepteur 1, en croissance exponentielle.

En variante, la valeur d'inductance L2f' de l'inductance de commande L2f varie de sorte que le carré de la pulsation propre ω2 varie sinusoïdalement en fonction du temps autour de (ω2moy)² et avec une pulsation égale à 2 x w2moy, de sorte à faire croître l'amplitude du courant électrique circulant dans le circuit résonnant récepteur 1, en croissance exponentielle.

En d'autres termes, selon cette variante, la valeur d'inductance L2f' de l'inductance de commande varie en fonction du temps selon 1/(C2' x (ω2)²), (ω2)² variant sinusoïdalement en fonction du temps et autour de la valeur (ω2moy)²

La deuxième capacitance C2 a une valeur sensiblement constante. On entend par valeur sensiblement constante, la valeur de cette capacitance, non comprises les variations de celle-ci liées à la température ou à l'usure ou tout autre facteur physique.

La fréquence prédéterminée est égale à deux fois la fréquence propre du circuit résonnant émetteur 2 à une tolérance ε près. Cette tolérance ε est telle que ε = √(((1/2) x hL x ω2moy)² - (R2' / (L2'+L2f'))²).

Ainsi, la fréquence prédéterminée est comprise entre (2xf2) - ε et (2xf2) + ε.

Une telle fréquence prédéterminée permet de faire croître l'amplitude du courant électrique circulant dans circuit résonnant émetteur 2.

Selon une mise en œuvre, l'amplitude de variation de pulsation prédéterminée hω est supérieure strictement à 2 x (R2' / (L2'+L2f')) x √((L2'+L2f') x C2').

Un exemple de réalisation de l'inductance de commande L2f est décrit en lien avec la figure 6.

L'inductance de commande L2f est ici formée un onduleur électronique de tension 9.

L'onduleur électronique de tension 9 comporte des composants de puissance, notamment des transistors de type IGBT formant au moins deux bras.

L'onduleur électronique de tension 9 délivre une tension alternative commandée au moyen d'une tension continue de commande VDC.

La tension continue de commande VDC est assurée par une alimentation apte à délivrer une puissance supérieure ou égale à la puissance à transmettre par le couplage inductif à résonance.

Les bornes desquelles la tension alternative est délivrées sont les bornes formant l'inductance de commande L2f, telle qu'émulée par l'onduleur électronique de tension 9.

Un exemple de réalisation de la deuxième inductance L2 est décrit en lien avec les figures 3 et 4.

La deuxième inductance L2 est ici formée par un ensemble à réluctance magnétique variable comportant un rotor 6 et un stator 3 avec présence d'un entrefer entre eux. Le stator 3 comporte un solénoïde 5 et une pluralité de bras statoriques 4, l'ensemble des bras statoriques 4 formant un unique pôle magnétique lorsque le solénoïde 5 est parcouru par un courant électrique. Le pôle est ici considéré du côté de l'entrefer. Le rotor 6 comporte une pluralité de bras rotoriques 7 formant un unique pôle magnétique lorsque le solénoïde 5 est parcouru par un courant électrique. Le pôle est ici considéré du côté de l'entrefer.

Ainsi, le solénoïde 5 constitue un enroulement. Le stator constitue une partie fixe et le rotor constitue une partie mobile, relativement à l'enroulement.

Comme on peut le voir à la figure 3, deux bras rotoriques 7 adjacents sont séparés deux à deux par une portion amagnétique et deux bras statoriques 4 adjacents sont séparés deux à deux par une portion amagnétique. Dans l'exemple considéré, le nombre de bras statoriques 4 est égal au nombre de bras rotoriques 7, en l'occurrence, ce nombre est égal à 12.

Ainsi, le stator 3 présente une pluralité de saillances, toutes de même polarité, cette polarité au sens de l'orientation nord ou sud, étant fonction de la phase du courant traversant le solénoïde 5. En outre, le rotor 6 présente une pluralité de saillances, toutes de même polarité, cette polarité au sens de l'orientation nord ou sud, étant fonction de la phase du courant traversant le solénoïde 5. Le stator 3 et le rotor 6 ont chacun le même nombre de saillances magnétiques, séparées par des absences de matière magnétique.

Chaque bras statorique 4 s'étend dans une direction radiale par rapport à l'axe de rotation X du rotor et comporte un paquet de tôles magnétiques feuilleté dont l'empilement est réalisé dans une direction orthoradiale par rapport à la direction radiale dans laquelle s'étend le bras statorique 4. Dans l'exemple considéré, l'empilement est réalisé dans une direction orthoradiale par rapport à l'axe de rotation X du rotor 6.

Chaque bras rotorique 7 s'étend dans une direction radiale par rapport à l'axe de rotation X du rotor et comporte un paquet de tôles magnétiques feuilleté dont l'empilement est réalisé dans une direction orthoradiale par rapport à la direction radiale dans laquelle s'étend le bras rotorique 7. Dans l'exemple considéré, l'empilement est réalisé dans une direction orthoradiale par rapport à l'axe de rotation X du rotor.

Le rotor 6 comporte un arbre 8 qui réalisé dans un matériau amagnétique. Ceci permet que le flux ne passe que par les bras rotoriques 7 et non par l'arbre 8, dans une direction axiale.

Dans l'exemple considéré, l'arbre 8 amagnétique du rotor 6 est ni feuilleté ni en ferrite doux afin d'éviter la formation de courants induits préjudiciables dans ledit arbre 8.

Comme on peut le voir à la figure 4, chaque bras rotorique 7 comporte une portion faisant saillie, notamment disposée radialement du côté de l'axe de rotation X du rotor 6. Ceci permet de canaliser le flux magnétique tout en permettant un meilleur maintien mécanique de l'ensemble constituant le rotor 6.

Dans l'exemple de la figure 3, le solénoïde 5 comporte une pluralité de spires s'étendant de manière concentrique. Dans l'exemple de la figure 4, le solénoïde 5 peut comporter une pluralité de spires s'étendant de manière axiale. En variante non représentée, le solénoïde 5 peut comporter une unique spire à plat.

Les spires sont dépourvues de fil de Litz. En variante, les spires comportent du fil de Litz dont la section a un diamètre strictement supérieur à 0,2 mm, notamment strictement supérieur à 0,3 mm.

Le solénoïde 5 est agencé de sorte qu'un courant alternatif circulant dans les spires le composant, soit de fréquence strictement inférieure à 3 kHz.

Un moteur électrique non représenté est accouplé à l'arbre 8 pour permettre d'entrainer en rotation le rotor 6 à une vitesse prédéterminée Ω exprimée en tours/s et étant telle que Ω = ((2xf0) +/- ε ) / (N), N étant le nombre de bras statoriques 4. Cette vitesse prédéterminée est considérée en régime permanent, c'est-à-dire à la fin d'un régime transitoire électro-mécanique.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres. Toutefois, l'étendue de la protection est uniquement définie par les revendications annexées.

## Revendications

1. Premier circuit résonnant, notamment émetteur (2) ou recepteur, pour réaliser une transmission de puissance sans contact par couplage inductif à résonance avec un deuxième circuit résonnant, notamment émetteur ou récepteur (1), comportant une première capacitance (C1) et un premier enroulement (E1), le premier enroulement (E1) comportant une inductance (L1) et une première résistance (R1),
- le premier circuit résonnant comportant une deuxième capacitance (C2) de valeur C2' et un deuxième enroulement (E2), le deuxième enroulement (E2) comportant une deuxième inductance (L2) de valeur L2', une deuxième résistance (R2) de valeur R2',
- le premier circuit résonnant ayant une pulsation propre ω2 telle que ω2=1/ √ (Leq x C2'), Leq étant l'inductance équivalente du premier circuit résonnant et une fréquence propre f2 telle que f2 = ω2/(2π),
- dans le quel la valeur d'inductance équivalente Leq varie de manière prédéterminée, dans lequel Leq = L2', la valeur d'inductance de la deuxième inductance (L2) variant selon une fréquence prédéterminée et selon une amplitude de variation d'inductance hL prédéterminée autour d'une valeur moyenne L2moy, de sorte que la pulsation propre varie selon une amplitude de variation de pulsation hω prédéterminée autour d'une valeur moyenne w2moy, avec ω2moy = 1/ √ (L2moy x C2'), **caractérisé en ce que** l'amplitude de variation de pulsation prédéterminée étant supérieure strictement à 2 x (R2' / L2') x √ (L2' x C2').

2. Premier circuit résonnant selon la revendication précédente, la fréquence prédéterminée étant choisie de sorte à faire croître l'amplitude du courant électrique circulant dans le circuit résonnant émetteur (2), en croissance exponentielle.

3. Premier circuit résonnant selon l'une quelconque des revendications précédentes, le premier circuit résonnant étant agencé pour être accordé au deuxième circuit résonnant.

4. Premier circuit résonnant selon l'une quelconque des revendications précédentes, **caractérisé en ce que** la fréquence prédéterminée est égale à deux fois la fréquence propre du circuit résonnant émetteur (2) à une tolérance ε près, la tolérance est notamment telle que ε étant telle que ε = √ (((1/2) x hL x ω2moy)² - (R2'/L2')²).

5. Premier circuit résonnant selon l'une quelconque des revendications précédentes, la deuxième inductance (L2) étant formée par un ensemble à réluctance magnétique variable comportant un rotor (6) et un stator (3) avec présence d'un entrefer entre eux,
- le stator (3) comportant un solénoïde (5) et une pluralité de bras statoriques (4), l'ensemble des bras statoriques (4) formant un unique pôle magnétique lorsque le solénoïde (5) est parcouru par un courant électrique et le pôle étant notamment considéré du côté de l'entrefer,
- le rotor (6) comportant une pluralité de bras rotoriques (7) formant un unique pôle magnétique lorsque le solénoïde (5) est parcouru par un courant électrique et le pôle étant notamment considéré du côté de l'entrefer.

6. Premier circuit résonnant selon l'une quelconque des revendications 1 à 5, la deuxième inductance (L2) étant formée par un solénoïde (5) et un onduleur électronique de tension (9) connectés électriquement en parallèle.

7. Premier circuit résonnant selon l'une quelconque des revendications précédentes, la deuxième inductance (L2) comportant un circuit magnétique, ledit circuit magnétique comportant au moins une partie mobile, relativement au deuxième enroulement (E2), la partie mobile étant notamment mue par un moteur électrique.

8. Dispositif (100) de transmission de puissance sans contact par couplage inductif à résonance, notamment pour charger ou recharger en énergie électrique un véhicule automobile, comportant :
- une source d'énergie (10), notamment à courant alternatif,
- un deuxième circuit résonnant, formant un circuit résonnant récepteur (1), comportant une première capacitance (C1) et un premier enroulement (E1), le premier enroulement (E1) comportant une inductance (L1) et une première résistance (R1),
- un premier circuit résonnant, formant un circuit résonnant émetteur (2), selon l'une quelconque des revendications précédentes, le circuit résonnant émetteur (2) étant alimenté par la source d'énergie (10).

9. Dispositif (100) de transmission de puissance sans contact par couplage inductif à résonance, notamment pour charger ou recharger en énergie électrique un véhicule automobile, comportant :
- une source d'énergie (10), notamment à courant alternatif,
- un deuxième circuit résonnant, formant un circuit résonnant émetteur, comportant une première capacitance et un premier enroulement, le premier enroulement comportant une inductance et une première résistance, le deuxième circuit est alimenté par la source d'énergie, un premier circuit résonnant selon l'une quelconque des revendications 1 à 7, le premier circuit résonnant formant un circuit résonnant récepteur.

## Patentansprüche

1. Erster Resonanzkreis, insbesondere Sender (2) oder Empfänger, zur kontaktlosen Leistungsübertragung durch induktive Resonanzkopplung mit einem zweiten Resonanzkreis, insbesondere Sender oder Empfänger (1), mit einer ersten Kapazität (C1) und einer ersten Wicklung (E1), wobei die erste Wicklung (E1) eine Induktivität (L1) und einen ersten Widerstand (R1) aufweist,
- wobei der erste Resonanzkreis eine zweite Kapazität (C2) mit dem Wert C2' und eine zweite Wicklung (E2) aufweist, wobei die zweite Wicklung (E2) eine zweite Induktivität (L2) mit dem Wert L2' und einen zweiten Widerstand (R2) mit dem Wert R2' aufweist,
- wobei der erste Resonanzkreis eine Eigenfrequenz ω2 derart aufweist, dass ω2=1/ √ (Leq x C2'), wobei Leq die äquivalente Induktivität des ersten Resonanzkreises ist, und eine Eigenfrequenz f2 derart, dass f2 = ω2/(2π),
- wobei der äquivalente Induktivitätswert Leq in vorbestimmter Weise variiert, wobei Leq = L2' ist, wobei der Induktivitätswert der zweiten Induktivität (L2) sich gemäß einer vorbestimmten Frequenz und gemäß einer vorbestimmten Induktivitätsänderungsamplitude hL um einen Mittelwert L2moy ändert, so dass die Eigenfrequenz sich gemäß einer vorbestimmten Schwingungsamplitude hω um einen Mittelwert ω2moy ändert, wobei ω2moy = 1/ √ (L2moy x C2') ist, **dadurch gekennzeichnet, dass**
die vorbestimmte Pulsationsänderungsamplitude streng größer als 2 x (R2' / L2') x √ (L2' x C2') ist.

2. Erster Resonanzkreis gemäß dem vorherigen Anspruch, wobei die vorgegebene Frequenz so gewählt ist, dass die Amplitude des im Sende-Resonanzkreis (2) fließenden elektrischen Stroms exponentiell ansteigt.

3. Erster Resonanzkreis gemäß einem der vorherigen Ansprüche, wobei der erste Resonanzkreis so angeordnet ist, dass er auf den zweiten Resonanzkreis abgestimmt ist.

4. Erste Resonanzschaltung nach einem der vorstehenden Ansprüche, **dadurch gekennzeichnet, dass** die vorbestimmte Frequenz gleich dem doppelten Eigenfrequenz der Sende-Resonanzschaltung (2) mit einer Toleranz ε ist, wobei die Toleranz insbesondere so ist, dass ε = √ (((1/2) x hL x ω2moy)² - (R2'/L2')²).

5. Erster Resonanzkreis gemäß einem der vorstehenden Ansprüche, wobei die zweite Induktivität (L2) durch eine Anordnung mit variabler magnetischer Reluktanz gebildet ist, die einen Rotor (6) und einen Stator (3) mit einem Luftspalt dazwischen umfasst,
- wobei der Stator (3) eine Solenoidspule (5) und mehrere Statorarme (4) aufweist, wobei die Statorarme (4) insgesamt einen einzigen Magnetpol bilden, wenn die Solenoidspule (5) von einem elektrischen Strom durchflossen wird, und wobei der Pol insbesondere auf der Seite des Luftspalts betrachtet wird,
- wobei der Rotor (6) mehrere Rotorarme (7) aufweist, die einen einzigen Magnetpol bilden, wenn der Solenoid (5) von elektrischem Strom durchflossen wird, und wobei der Pol insbesondere auf der Seite des Luftspalts betrachtet wird.

6. Erster Resonanzkreis nach einem der Ansprüche 1 bis 5, wobei die zweite Induktivität (L2) durch eine Spule (5) und einen elektronischen Spannungswechselrichter (9) gebildet wird, die elektrisch parallel geschaltet sind.

7. Erster Resonanzkreis nach einem der vorstehenden Ansprüche, wobei die zweite Induktivität (L2) einen Magnetkreis aufweist, der mindestens einen gegenüber der zweiten Wicklung (E2) beweglichen Teil aufweist, wobei der bewegliche Teil insbesondere durch einen Elektromotor angetrieben wird.

8. Vorrichtung (100) zur kontaktlosen Kraftübertragung durch induktive Resonanzkopplung, insbesondere zum Laden oder Aufladen eines Kraftfahrzeugs mit elektrischer Energie, mit:
- eine Energiequelle (10), insbesondere mit Wechselstrom,
- einen zweiten Resonanzkreis, der einen Empfangsresonanzkreis (1) bildet und eine erste Kapazität (C1) und eine erste Wicklung (E1) umfasst, wobei die erste Wicklung (E1) eine Induktivität (L1) und einen ersten Widerstand (R1) umfasst,
- einen ersten Resonanzkreis, der einen Sende-Resonanzkreis (2) bildet, gemäß einem der vorstehenden Ansprüche, wobei der Sende-Resonanzkreis (2) von der Energiequelle (10) gespeist wird.

9. Vorrichtung (100) zur kontaktlosen Energieübertragung durch induktive Resonanzkopplung, insbesondere zum Laden oder Aufladen eines Kraftfahrzeugs mit elektrischer Energie, mit:
- einer Energiequelle (10), insbesondere einer Wechselstromquelle,
- einem zweiten Resonanzkreis, der einen Sende-Resonanzkreis bildet und eine erste Kapazität und eine erste Wicklung aufweist, wobei die erste Wicklung eine Induktivität und einen ersten Widerstand aufweist, wobei der zweite Schwingkreis von der Energiequelle gespeist wird,
einen ersten Resonanzkreis gemäß einem der Ansprüche 1 bis 7, wobei der erste Resonanzkreis einen Empfänger-Resonanzkreis bildet.

## Claims

1. First resonant circuit, in particular transmitter (2) or receiver, for contactless power transmission by inductive resonance coupling with a second resonant circuit, in particular transmitter or receiver (1), comprising a first capacitance (C1) and a first winding (E1), the first winding (E1) comprising an inductance (L1) and a first resistance (R1),
- the first resonant circuit comprising a second capacitance (C2) of value C2' and a second winding (E2), the second winding (E2) comprising a second inductance (L2) of value L2', a second resistance (R2) of value R2',
- the first resonant circuit having a natural frequency ω2 such that ω2 = 1/√(Leq x C2'), Leq being the equivalent inductance of the first resonant circuit and a natural frequency f2 such that f2 = ω2/(2π),
- in which the equivalent inductance value Leq varies in a predetermined manner, in which Leq = L2', the inductance value of the second inductance (L2) varying according to a predetermined frequency and according to a predetermined inductance variation amplitude hL around a mean value L2moy, so that the natural frequency varies according to a predetermined pulse variation amplitude hω around a mean value ω2moy, with ω2moy = 1/ √ (L2moy x C2'), **characterised in that**
**in that** the predetermined pulse variation amplitude is strictly greater than 2 x (R2' / L2') x √ (L2' x C2').

2. First resonant circuit according to the previous claim, the predetermined frequency being chosen so as to cause the amplitude of the electric current flowing in the transmitting resonant circuit (2) to increase exponentially.

3. First resonant circuit according to any of the previous claims, the first resonant circuit being arranged to be tuned to the second resonant circuit.

4. First resonant circuit according to any of the preceding claims, **characterised in that** the predetermined frequency is equal to twice the natural frequency of the transmitting resonant circuit (2) within a tolerance ε, the tolerance being such that ε = √ (((1/2) x hL x ω2moy)² - (R2'/L2')²).

5. First resonant circuit according to any of the preceding claims, the second inductance (L2) being formed by a variable magnetic reluctance assembly comprising a rotor (6) and a stator (3) with an air gap between them,
- the stator (3) comprising a solenoid (5) and a plurality of stator arms (4), the set of stator arms (4) forming a single magnetic pole when the solenoid (5) is traversed by an electric current and the pole being considered in particular on the side of the air gap,
- the rotor (6) comprising a plurality of rotor arms (7) forming a single magnetic pole when the solenoid (5) is traversed by an electric current, the pole being considered in particular on the side of the air gap.

6. First resonant circuit according to any of claims 1 to 5, the second inductance (L2) being formed by a solenoid (5) and an electronic voltage inverter (9) connected electrically in parallel.

7. First resonant circuit according to any of the preceding claims, the second inductance (L2) comprising a magnetic circuit, said magnetic circuit comprising at least one part that is movable relative to the second winding (E2), the movable part being driven in particular by an electric motor.

8. Device (100) for contactless power transmission by inductive resonance coupling, in particular for charging or recharging a motor vehicle with electrical energy, comprising:
- an energy source (10), in particular an alternating current source,
- a second resonant circuit, forming a receiver resonant circuit (1), comprising a first capacitance (C1) and a first winding (E1), the first winding (E1) comprising an inductance (L1) and a first resistance (R1),
- a first resonant circuit, forming a transmitter resonant circuit (2), according to any of the preceding claims, the transmitter resonant circuit (2) being supplied by the energy source (10).

9. Device (100) for contactless power transmission by inductive resonance coupling, in particular for charging or recharging a motor vehicle with electrical energy, comprising:
- an energy source (10), in particular an alternating current source,
- a second resonant circuit, forming a transmitter resonant circuit, comprising a first capacitance and a first winding, the first winding comprising an inductance and a first resistance, the second circuit being supplied by the energy source,
a first resonant circuit according to any of claims 1 to 7, the first resonant circuit forming a receiver resonant circuit.
